# EUROPEAN PATENT APPLICATION

(11) **EP 1 283 497 A2**
(43) Date of publication of application: **12.02.2003**
(21) Application number: 02255168.3
(22) Date of filing: 24.07.2002
(51) Int. Cl.: G06T 1/00

(54) **Data processing apparatus, data processing system, data processing method, memory medium and program therefor**

(30) Priority: 31.07.2001 JP 2001232647
(71) Applicant: CANON KABUSHIKI KAISHA, Tokyo (JP)
(72) Inventor: Sato, Masayuki, Ohta-ku, Tokyo (JP)
(74) Representative: Beresford, Keith Denis Lewis

(57) **Abstract**

The invention provides a data processing apparatus capable of efficiently executing the embedding process of digital watermark information into object data, and also capable of, in the process of embedding the digital watermark information into the object data, acquiring the digital watermark information matching the purpose of use or means of the object data.

Acquisition means 207 acquires digital watermark information 208, based on information 205 relating to the object data 202 and addition information 206 corresponding to the object data 202. Embedding means 209 embeds the digital watermark information 208, obtained in the acquisition means 207, into the object data 202.

## Description

### BACKGROUND OF THE INVENTION

### Field of the Invention

The present invention relates to a data processing apparatus, a data processing system, a data processing method, a memory medium and a program therefor.

### Related Background Art

With the recent progress in the computer and the network, multimedia data such as character data, image data or audio data are being handled in the computer or on the network. In the dissemination of such multimedia data, in order to protect the copyright of such data, it is becoming popular to embed, in such data, copyright information or information indicating the unique feature capable of specifying such data (hereinafter also called specifying information) as the digital watermark information.

In the conventional embedding process of the digital watermark information as explained in the foregoing, however, the aforementioned specifying information is directly embedded as the digital watermark information in the object data. For this reason, in extracting the digital watermark information, it is common to confirm the extracted digital watermark information or the specifying information. As the specifying information varies for each object data, depending on the format or size thereof, it has always been necessary to analyze the specifying information also at the embedding of such specifying information as the digital watermark information. Consequently it has always been necessary to analyze the specifying information itself at the embedding and extraction of such specifying information.

### SUMMARY OF THE INVENTION

In the present invention, addition information is embedded together with the specifying information into the image information. Thus, in the extraction of the digital watermark information, it is enabled to judge whether the image has been altered, with the analysis of such specifying information, by analyzing the data of the addition information.

It is also made possible to improve the process efficiency at the embedding process. In the present invention, in the process of embedding the digital watermark information into the object data, it is made possible to acquire the digital watermark information depending on the purpose or means of the object data. The present invention is to provide a data processing apparatus, a data processing system, a data processing method, a computer readable memory medium storing a program for executing the aforementioned embedding process and analyzing process, and such program.

In a first aspect the present invention provides a data processing apparatus capable of embedding digital watermark information into object data, comprising acquisition means for acquiring digital watermark information based on information relating to the object data and addition information corresponding to the object data, and embedding means for embedding the digital watermark information obtained by the acquisition means into the object data.

A preferred feature of the invention, in that the aforementioned acquisition means acquires the addition information based on information relating to the object data.

A second aspect of the invention comprises a data processing apparatus capable of judging legitimacy of the object data, comprising judgment means for judging the legitimacy of the object data from the addition information contained in the above-mentioned digital watermark information and obtained based on the information relating to the object data.

A third aspect comprises a data processing apparatus capable of embedding digital watermark information in image data, comprising image information acquisition means for acquiring information relating to the image data, digital watermark information acquisition means for acquiring digital watermark information based on the information by the image information acquisition means and addition information corresponding to the image data, and information embedded image acquisition means for acquiring an information embedded image by combining the digital watermark information obtained by the digital watermark information acquisition means and the above-mentioned image data.

A fourth aspect comprises a data processing apparatus for judging the legitimacy of the image data by digital watermark information extracted from image data, comprising judgment means for judging the legitimacy of the object data by the comparison of the above-mentioned digital watermark information and the information to be embedded in the above-mentioned image data.

A fifth aspect comprises a data processing system consisting of plural equipment connected in mutually communicable manner, in which at least one of such plural equipment has the function of the data processing apparatus according to any of first to fifth inventions.

A sixth aspect comprises a data processing method for embedding digital watermark information into object data, comprising an acquisition step of acquiring digital watermark information based on information relating to the object data and addition information corresponding to the object data, and an embedding step of embedding the digital watermark information obtained by the acquisition step into the object data.

A seventh aspect comprises a data processing method for judging legitimacy of the object data, comprising a judgment step of judging the legitimacy of the object data from addition information contained in the above-mentioned digital watermark information and obtained based on the information relating to the object data.

An eighth aspect comprises a computer readable memory medium storing a program for enabling a computer to realize the function of the data processing apparatus according to any of first to fifth inventions or the function of the data processing system according to sixth invention.

A ninth aspect comprises a computer readable memory medium storing a program for enabling a computer to execute the process steps of the data processing method according to seventh or eighth invention.

A tenth aspect comprises a program for enabling a computer to realize the function of the data processing apparatus according to any of first to fifth inventions or the function of the data processing system according to sixth invention.

An eleventh aspect comprises a program for enabling a computer to execute the process steps of the data processing method according to claim seventh or eighth invention.

Still other functions and features of the present invention will become fully apparent from the following description of the embodiment to be taken in conjunction with the accompanying drawings.

### BRIEF DESCRIPTION OF THE DRAWINGS

Fig. 1 is a block diagram showing the configuration of a data processing apparatus;
Fig. 2 is a block diagram showing, in the above-mentioned data processing apparatus, the configuration of a function for adding digital watermark information to object data;
Fig. 3 is a flow chart showing the process in an image information acquisition unit in the above-mentioned function;
Fig. 4 is a view showing image reference information to be used in the above-mentioned image information acquisition unit;
Fig. 5 is a flow chart showing the process in an addition information acquisition unit in the above-mentioned function;
Fig. 6 is a view showing addition reference information to be used in the above-mentioned addition information acquisition unit;
Fig. 7 is a flow chart showing the process in an information embedding unit in the above-mentioned function;
Fig. 8 is a block diagram showing, in the above-mentioned data processing apparatus, the configuration of a function for acquiring digital watermark information from the data in which the digital watermark information is added;
Fig. 9 is a flow chart showing the process in an embedded information extracting unit in the above-mentioned function; and
Fig. 10 is a flow chart showing the process in an addition information judgment unit in the above-mentioned function.

### DESCRIPTION OF THE PREFERRED EMBODIMENTS

Now the present invention will be clarified in detail by embodiments thereof, with reference to the accompanying drawings.

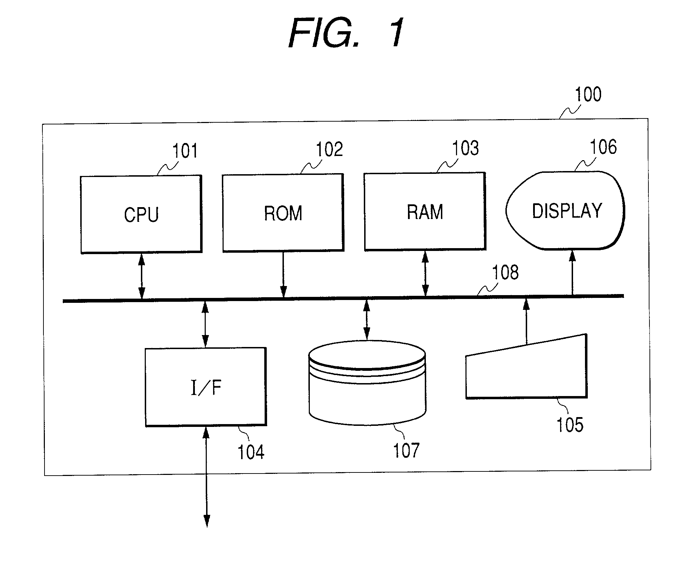

The present invention is applicable, for example, to a data processing apparatus 100 shown in Fig. 1.

The principal functions of the data processing apparatus 100 of the present embodiment are classified into a function of adding digital watermark information to object data, and a function of acquiring the digital watermark information from data in which such digital watermark information is added.

In particular, the data processing apparatus 100 of the present embodiment is provided, as the function of adding the digital watermark information to the object data, with a function of acquiring addition intensity of the digital watermark information according to the purpose of use required for the object data, acquiring addition information for the object data based on such acquired intensity, and adding such addition information to the object data.

In the following, there will be given specific explanation on:
(1) the function of adding the digital watermark information to the object data; and
(2) the function of acquiring the digital watermark information from the data in which such digital watermark information is added;
provided in the data processing apparatus 100 of the present invention.

In the function (1), the object data are assumed to be image data of a still image, and addition information prepared in advance as will be explained later is embedded, together with the digital watermark information, into such image data.

In the function (2), there will be principally explained a configuration of extracting the above-mentioned addition information from the data (image data) in which the digital watermark information is embedded.

### <(1) Function of adding digital watermark information to object data (image data)>

### (Entire configuration of data processing apparatus 100)

The data processing apparatus 100 includes a terminal equipment such as a personal computer, and has a configuration as shown in Fig. 1, in which a CPU 101, a ROM 102, a RAM 103, a display 106, an interface (I/F) 104, an external memory 107 and an input device 105 are mutually connected through a system bus 108 so as to be capable of data exchange.

The CPU 101 controls the functions of the entire data processing apparatus 100 by reading and executing predetermined process programs stored for example in the ROM 102.

The ROM 102 stores the process programs to be executed by the CPU 101 and various data.

The RAM 103 provides a work area etc. for the CPU 101.

The I/F 104 includes a network interface and enables communication with an apparatus or a system on an external network.

The input device 105 includes a keyboard, a mouse etc. and is used by the user for instructing various operations to the data processing apparatus 100.

The display 106 displays various data etc. under the control by the CPU 101.

The external memory 107 executes data readout and storage on memory media such as a flexible disk, a hard disk, a CD-ROM etc.

The program to be executed by the CPU 101 need not necessarily be stored in the ROM 102 but may be stored in the external memory 107. In such case, the CPU 101 executes the program after once loading the program of the external memory 107 in the RAM 103.

### (Principal functions of data processing apparatus 101)

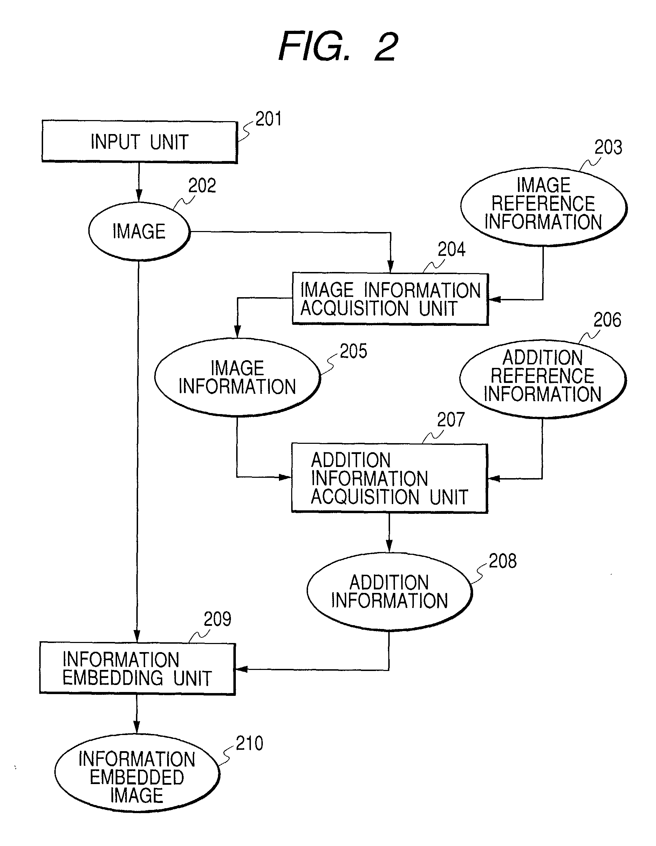

Fig. 2 shows the principal functions (processing units) of the data processing apparatus 100 of the present embodiment, and such functions are executed under the control of the CPU 101.

As shown by rectangles in Fig. 2, the data processing apparatus 100 is provided with an input unit 201, an image information acquisition unit 204, an addition information acquisition unit 207 and an information embedding unit 209.

Each of an image 202, image reference information 203, image information 205, addition reference information 206, addition information 208, and an information embedded image 210, represented by oval lines in Fig. 2, is information to be used in the process in the input unit 201, the image information acquisition unit 204, the addition information acquisition unit 207 and the information embedding unit 209 or information generated by such process. Such information are stored in the ROM 102, RAM 103 or external memory 107. In the following there will be explained a case of storage in the external memory 107 as an example.

### (Entire function of data processing apparatus 100)

In the following there will be explained the outline of function of the data processing apparatus 100 by the functions thereof shown in Fig. 2.

At first, the input unit 201 receives an image 202, which constitutes image data to be processed, and stores the image 202 in the external memory 107.

Based on the image 202 stored in the external memory 107, the image information acquisition unit 204 acquires corresponding image information 205 from image reference information 203 to be explained later.

Based on addition reference information 206 to be explained later and the image information 205 acquired by the image information acquisition unit 204, the addition information acquisition unit 207 acquires addition information 208 to be added to the image 202.

The information embedding unit 209 embeds, to the image 202 stored in the external memory 107, the addition information 208 obtained in the addition information acquisition unit 207 as digital watermark information, thereby generating information embedded image 210.

### (Explanation on process units and information in data processing apparatus 100)

### (1) Input unit 201 and image 202

The image 202 entered by the input unit 201 is for example a multi-value image data having a predetermined number of bits per pixel, and, more specifically, multi-value color image data having 8 bits for each of R, G and B. In the present embodiment, the image 202 consisting of such multi-value color image data is to be processed for each of R, G and B colors.

### (2) Image information acquisition unit 204 and image reference information 203

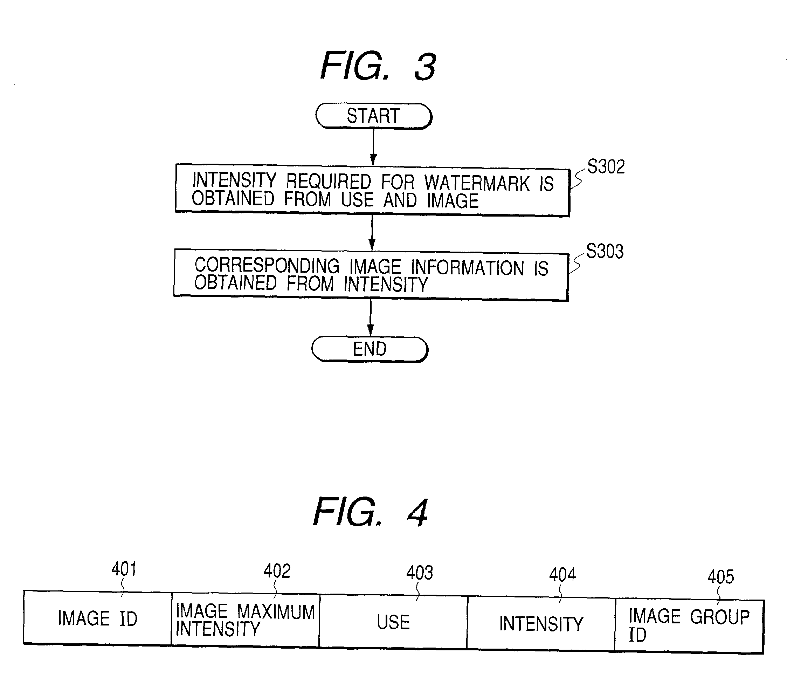

The image information acquisition unit 204 executes, for example, a process according to the flow chart shown in Fig. 3.

More specifically, at first, in order to acquire an appropriate embedding intensity for embedding the digital watermark information into the image 202, the image information acquisition unit 204 acquires such intensity information for example based on the purpose of use of the image 202 (step S302).

In the present embodiment, the embedding intensity is determined according to the purpose of use of the image 202, but the intensity may also be specified according to other various information.

Then, based on the intensity information acquired in the step S302, the image information acquisition unit 204 acquires corresponding image reference information 203, from which it also acquires image information 205 for specifying the image 202 (step S303).

Fig. 4 shows an example of the image reference information 203.

As shown in Fig. 4, the image reference information 203 includes an image ID 401, a maximum image intensity 402, a use 403, an intensity 404 and an image group ID 405. In practice, the image reference information 203 is prepared in plural patterns.

The image ID 401 is equivalent to the ID for specifying the image 202.

The maximum image intensity 402 is information indicating the necessary minimum intensity in the general use of the image 202.

The use 403 is information corresponding to the purpose of use of the image 202.

The intensity 404 is information corresponding to the necessary minimum intensity of the image 202 for each purpose of use.

The image group ID 405 is information equivalent to ID for specifying the information grouped for each intensity of the image, to be used in the addition reference information 206 to be explained later.

In the aforementioned step S302, the image information acquisition unit 204 specifies a record including the intensity 404 corresponding to the image ID 401 and the use 403, among plural records of the image reference information 203. In the step S303, the image ID 401, image group ID 405 and intensity 404, contained in the record specified in the image reference information 203 of the step S302 are acquired as the image information 205.

### (3) Addition information acquisition unit 207 and addition reference information 206

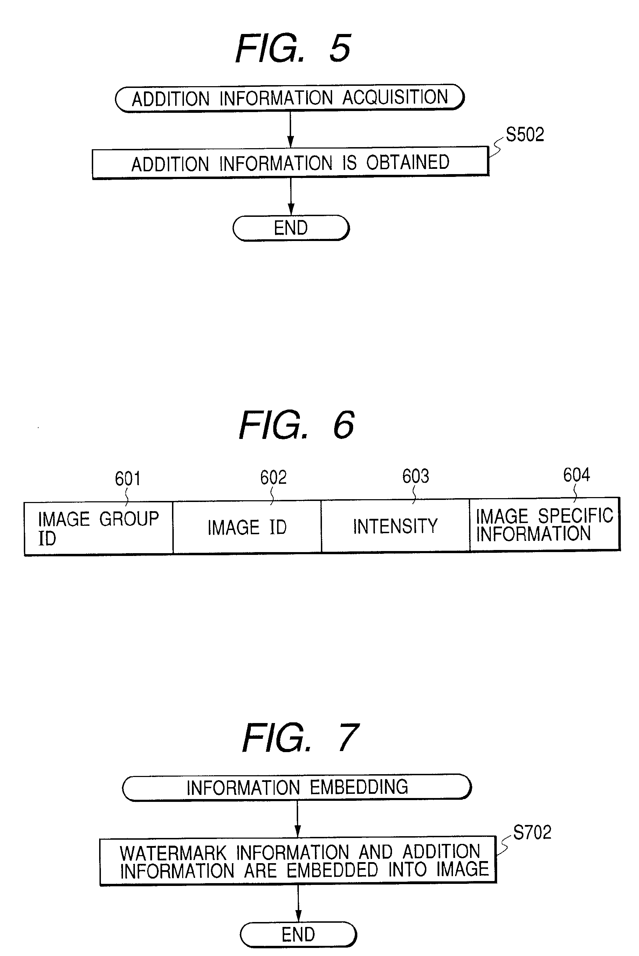

The addition information acquisition unit 207 executes a process according, for example, to a flow chart shown in Fig. 5.

More specifically, based on the image information 205 and the addition reference information 206 obtained by the image information acquisition unit 204, the addition information acquisition unit 207 acquires the addition information 208 (step S502).

The image information 205 is information specifying the image 202, obtained by the image information acquisition unit 204 from the image reference information 203 (cf. Fig. 4). In the present example, the image ID 401, image group ID 405 and intensity 404 contained in the image reference information 203 are used as the image information 205, but there may also be utilized other information.

Fig. 6 shows an example of the addition reference information 206.

As shown in Fig. 6, the addition reference information 206 includes the image group ID 601, the image ID 602, the intensity 603 and the image specific information 604. In practice, the addition reference information 206 is prepared in plural patterns.

The image group ID 601 and the image ID 602 are respectively equivalent to the image group ID 405 and the image ID 401 of the image reference information 203 shown in Fig. 4.

The image specific information 604 is equivalent to the digital watermark information to be added to the designated image 202 in order to maintain the intensity thereof. Also the image specific information 604 is information specifying the image 202 and the intensity thereof, and may be composed, for example, of the distribution value of the luminance signals of the pixels of the image 202 or the distribution value obtainable by DCT (discrete cosine transformaton), FFT (Fourier transformation) or wavelet transformation of such signals of the image 202 in a stage prior to the embedding of the digital watermark information.

In the present example, the addition information acquisition unit 207 acquires, from the plural addition reference information 206, the addition reference information 206 corresponding to the image group ID 405 contained in the image information 205 obtained in the image information acquisition unit 204, and also acquires the image group ID 601, image ID 602, intensity 603 and image specific information 604 of such addition reference information 206, as the addition information 208.

### (4) Information embedding unit 209 and information embedded image 210

The information embedding unit 209 executes a process according, for example, to a flow chart shown in Fig. 7.

More specifically, the information embedding unit 209 embeds the addition information 208, obtained in the addition information acquisition unit 207, as the digital watermark information into the image 202, thereby generating the information embedded image 210 (step S702).

For embedding the digital watermark information, there can be utilized various methods, for example a bit plane method utilizing specified bits such as the pixel values of the image 202 for digital watermarking, a quantization method of manipulating the pixels values of the image 202, or a spectrum diffusion method in which the digital watermark information is expanded (diffused) in a wide band.

In the present example, as explained above, the image group ID 601, image ID 602, intensity 603 and image specific information 604 contained in the addition reference information 206 are used as the digital watermark information, or the addition information 208 obtained in the addition information acquisition unit 207.

### <(2) Function of obtaining digital watermark information from data in which such digital watermark information is added>

### (Principal functions of data processing apparatus 100)

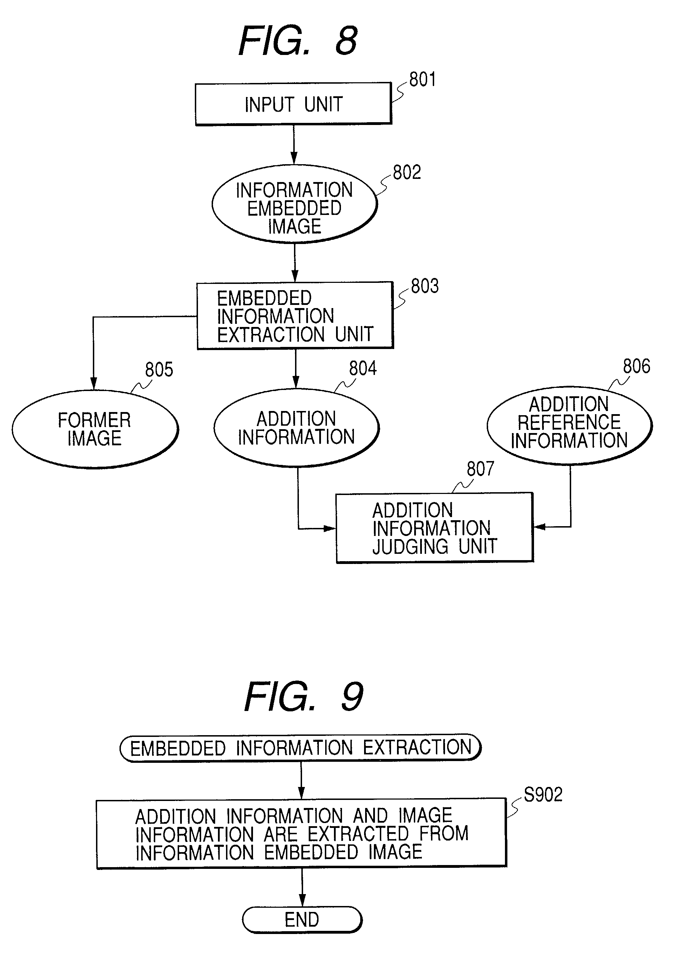

Fig. 8 shows principal functions (process units) of the data processing apparatus 100 shown in Fig. 1, and such functions are executed under the control of the CPU 101.

As shown by rectangles in Fig. 8, the data processing apparatus 100 is provided with an input unit 801, an embedded information extraction unit 803 and an addition information judgment unit 807.

Each of an information embedded image 802, addition information 804, a former image 805 and an addition reference information 806, represented by oval lines in Fig. 8, is information to be used in the process in the input unit 801, the embedded information extraction unit 803 and the addition information judgment unit 807 or information generated by such process. Such information are stored in the ROM 102, RAM 103 or external memory 107. In the following there will be explained a case of storage in the external memory 107 as an example. (Entire function of data processing apparatus 100)

In the following there will be explained the outline of function of the data processing apparatus 100 by the functions thereof shown in Fig. 8.

At first, the input unit 801 receives an information embedded image 802, which is an image including the embedded digital watermark information, and stores the image 802 in the external memory 107.

From the image 802 stored in the external memory 107, the embedded information extraction unit 803 extracts the digital watermark information (addition information) 804 and the former image 805 (image prior to the embedding of the digital watermark information).

The addition information judgment unit 807 compares the addition information 804 obtained in the embedded information extraction unit 803 with the addition reference information 806, thereby judging whether the former image 805 has been altered or changed.

### (Explanation on process units and information in data processing apparatus 100)

### (1) Input unit 801 and information embedded image 802

The information embedded image 802 entered by the input unit 801 is assumed as the information embedded image 210 in Fig. 2.

Also the input unit 801 has a function similar to that of the input unit 201 shown in Fig. 2.

### (2) Embedded information extraction unit 803

The embedded information extraction unit 803 executes, for example, a process according to the flow chart shown in Fig. 9.

More specifically, the embedded information extraction unit 803 fetches the information embedded image 802, entered by the input unit 801 and stored in the external memory 107, and extracts the addition information 804 and the former image 805 which is the image prior to the information embedding from the information embedded image 802 (step S902).

The extraction method in this step corresponds to the embedding process in the information embedding unit 209 shown in Fig. 2.

### (3) Addition information judgment unit 807 and addition reference information 806

At first, the addition reference information 806 is equivalent to the addition reference information 206 (cf. Fig. 6) shown in Fig. 2.

Also the addition information 804 obtained in the embedded information extraction unit 803 is equivalent to the addition information 208 in Fig. 2 if the information embedded image 210 in Fig. 2 is equivalent to the information embedded image 802 in Fig. 8.

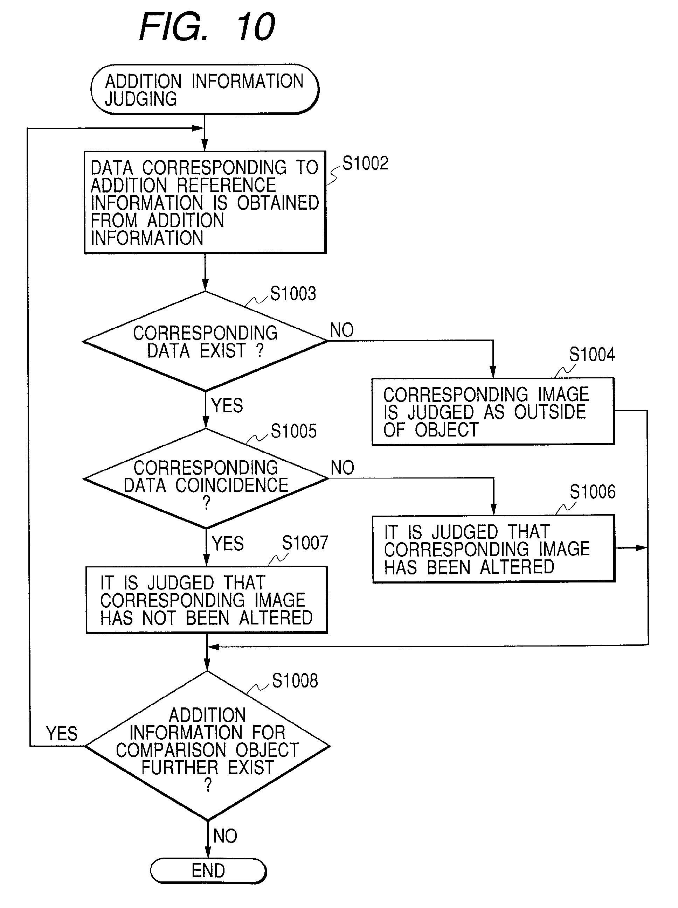

The addition information judgment unit 807 executes a process according, for example, to a flow chart shown in Fig. 10.

More specifically, at first, the addition information judgment unit 807 acquires, among the addition reference information 806 of plural patterns, the addition reference information 806 corresponding to the addition information 804 obtained in the embedded information extraction unit 803 (step S1002).

Then the addition information judgment unit 807 judges whether the addition reference information 806 corresponding to the addition information 804 exists (step S1003).

If the judgment of the step S1003 identifies that the addition reference information 806 corresponding to the addition information 804 does not exist, the addition information judgment unit 807 regards that the former image 805 added with the addition information 804 is not the object image of processing (step S1004) and proceeds to a step S1008 to be explained later.

On the other hand, if the judgment of the step S1003 identifies that the addition reference information 806 corresponding to the addition information 804 exists, the addition information judgment unit 807 judges whether such addition information 804 coincides with the addition reference information 806 (step S1005).

If the judgment of the step S1005 identifies that the addition information 804 does not coincide with the addition reference information 806, the addition information judgment unit 807 regards that the former image 805 added with the addition information 804 is the object image of processing but has been altered or changed (step S1006) and proceeds to a step S1008 to be explained later.

On the other hand, if the judgment of the step S1005 identifies that the addition information 804 coincides with the addition reference information 806, the addition information judgment unit 807 regards that the former image 805 added with the addition information 804 is the object image of processing and has not been altered or changed (step S1007) and proceeds to a step S1008 to be explained later.

After the process of the step S1004, S1006 or S1007, the addition information judgment unit 807 judges whether there exists addition information 804 to be processed further (step S1008), and, if such addition information exists, the process from the step S1002 is repeated, but, if it does not exists, the present process is terminated.

The objects of the present invention can naturally be attained also by supplying a system or an apparatus with a memory medium storing program codes of a software realizing the functions of the host and terminal equipment of the aforementioned embodiment and causing a computer (or a CPU or an MPU) of such system or apparatus to read and execute the program codes stored in the memory medium.

In such case, the program codes themselves read from the memory medium realize the functions of the present embodiment, and the memory medium storing such program codes and such program codes constitute the present invention.

The memory medium for supplying the program codes can be, for example, a ROM, a flexible disk, a hard disk, an optical disk, a magnetooptical disk, a CD-ROM, a CD-R, a magnetic tape or a non-volatile memory card.

The present invention naturally includes not only a case where the functions of the aforementioned embodiment are realized by the computer by executing the read program codes, but also a case where an OS or the like functioning on the computer executes all the actual processes or a part thereof under the instructions of such program codes, thereby realizing the functions of the aforementioned embodiment.

The present invention further includes a case where the program codes read from the memory medium are once stored in a memory provided in a function expansion board inserted into the computer or a function expansion unit connected thereto and a CPU or the like provided in such function expansion board or function expansion unit executes all the processes or a part thereof, thereby realizing the functions of the aforementioned embodiment.

In the embodiment explained in the foregoing, in embedding the digital watermark information into the object data (such as image data), the digital watermark information is generated from the information relating to the object data (for example information obtained from the intensity information at the embedding of the digital watermark information, according to the purpose of use of the object data) and the addition information corresponding to the object data (for example information for specifying the object data, obtained based on the information relating to the object data), and such digital watermark information is embedded into the object data.

Also in judging the legitimacy of the object data, such as whether the object data have been altered or changed, the digital watermark information embedded in the object data (for example the digital watermark information generated from the information relating to the object data and the addition information corresponding to the object data) are compared with the information which should be embedded in the object data, and the legitimacy of the object data is judged from the result of such comparison.

Such configuration enables to efficiently execute the embedding process of the digital watermark information into the object data, and, in the process of embedding the digital watermark information into the object data, to acquire the digital watermark information matching the purpose of use or means of the object data.

## Claims

1. A data processing apparatus for embedding digital watermark information into object data, comprising:
acquisition means for acquiring digital watermark information based on information relating to the object data and addition information corresponding to the object data; and
embedding means for embedding the digital watermark information obtained by said acquisition means into the object data.

2. A data processing apparatus according to claim 1, wherein said acquisition means acquires said addition information based on information relating to the object data.

3. A data processing apparatus for judging legitimacy of object data by digital watermark information extracted from the object data, comprising judgment means for judging the legitimacy of the object data from addition information contained in said digital watermark information and obtained based on the information relating to the object data.

4. A data processing apparatus for embedding digital watermark information in image data, comprising:
image information acquisition means for acquiring information relating to said image data;
digital watermark information acquisition means for acquiring digital watermark information based on the information obtained by said image information acquisition means and addition information corresponding to said image data; and
information embedded image acquisition means for acquiring an information embedded image by combining the digital watermark information obtained by said digital watermark information acquisition means and said image data.

5. A data processing apparatus for judging the legitimacy of image data by digital watermark information extracted from said image data, comprising:
judgment means for judging the legitimacy of the object data by the comparison of said digital watermark information and the information to be embedded in said image data.

6. A data processing system comprising plural equipment connected in mutually communicable manner, wherein at least one of such plural equipment has the function of the data processing apparatus according to any of claims 1 to 5.

7. A data processing method for embedding digital watermark information into object data, comprising:
an acquisition step of acquiring digital watermark information based on information relating to the object data and addition information corresponding to the object data; and
an embedding step of embedding the digital watermark information obtained by said acquisition step into the object data.

8. A data processing method for judging legitimacy of object data by digital watermark information extracted from the object data, comprising:
a judgment step of judging the legitimacy of the object data from addition information contained in said digital watermark information and obtained based on the information relating to the object data.

9. A computer readable memory medium storing a program for enabling a computer to realize the function of the data processing apparatus according to any of claims 1 to 5 or the function of the data processing system according to claim 6.

10. A computer readable memory medium storing a program for enabling a computer to execute the process steps of the data processing method according to claim 7 or 8.

11. A program for enabling a computer to realize the function of the data processing apparatus according to any of claims 1 to 5 or the function of the data processing system according to claim 6.

12. A program for enabling a computer to execute the process steps of the data processing method according to claim 7 or 8.
